# EUROPÄISCHE PATENTSCHRIFT

(11) **EP 1 660 356 B1**
(45) Veröffentlichungstag und Bekanntmachung des Hinweises auf die Patenterteilung: **02.05.2007**
(21) Anmeldenummer: 04764598.1
(22) Anmeldetag: 27.08.2004
(51) Int. Cl.: B60R 21/20

(54) **GEHÄUSE FÜR EINE AIRBAGVORRICHTUNG**
HOUSING FOR AN AIRBAG DEVICE
BOITIER POUR SYSTEME D'AIRBAG

(30) Priorität: 03.09.2003 DE 10340513
(43) Veröffentlichungstag der Anmeldung: 31.05.2006
(73) Patentinhaber: AUTOLIV DEVELOPMENT AB, 447 83 Vargarda (SE)
(72) Erfinder: HELBIG, Michael, 81241 München (DE); BRANDS, Stefan, 86551 Aichach (DE); BOTTESCH, Hans-Georg, 85241 Herbertshausen (DE); PRYS, Ingolf, 85652 Pliening / Landsham (DE)
(74) Vertreter: Koch, Henning
(86) Internationale Anmeldenummer: PCT/EP2004/009624
(87) Internationale Veröffentlichungsnummer: WO 2005/023603

(56) Entgegenhaltungen:
- US-A- 5 883 356
- US-A1- 2002 149 179
- US-B1- 6 250 669

## Beschreibung

Die Erfindung betrifft ein Gehäuse für eine Airbagvorrichtung gemäß dem Oberbegriff des Patenanspruchs 1, das z.B. aus der US 2002/149179 A1 bekannt ist.

Aus der WO00/06421 A1 ist eine Seitenairbagvorrichtung zum Schutz von Fahrzeuginsassen auf einer Fahrzeugrückbank bekannt. Diese Seitenairbagvorrichtung ist derart ausgebildet und im Bereich eines Türausschnittes an der Fahrzeugkarosserie befestigt, dass sich deren Gassack im Rückhaltefall zwischen einen Fahrzeuginsassen und die Innenwand der Fahrzeugstruktur schiebt.

Zudem offenbart die EP 0 826 565 A2 ein Seitenairbagmodul, welches seitlich in der Rückenlehne eines Fahrzeugsitzes angeordnet ist. Bei diesem Seitenairbagmodul sind ein Gasgenerator und ein Gassack derart im Schaumstoff der Rückenlehne eingebettet, dass von außen nur eine Gehäuseabdeckung und Nähte im Sitzbezug auf die Anwesenheit des Seitenairbagmoduls hindeuten. Zudem ist in dem Schaumstoff und in der Gehäuseabdeckung jeweils eine von außen nicht sichtbare Materialschwächung ausgebildet, die im Sinne einer Aufreißlinie wirkt, wenn sich der vom Gas des Gasgenerators angetriebene Gassack entfaltet.

Darüber hinaus ist aus der DE 197 30 837 A1 eine elastische Gehäuseabdeckung für eine Airbageinrichtung an einem Fahrzeuglenkrad bekannt, bei der diese Gehäuseabdeckung zumindest bereichsweise definierte Sollbruchstellen aufweist, die durch einen sich im Rückhaltefall entfaltenden Gassack zur Freisetzung desselben aufgerissen werden. Um ein gutes äußeres Erscheinungsbild der Gehäuseabdeckung erzielen zu können, sind diese als Perforation ausgebildeten Sollbruchstellen in einem vom Innenraum des Kraftfahrzeuges nicht sichtbaren Befestigungsabschnitt angeordnet.

Schließlich sind Seitenairbagvorrichtungen mit einem Kunststoffgehäuse bekannt, in dessen Hohlraum ein Container eines Gasgenerators sowie ein Gassack angeordnet sind. Zudem weist ein solches Gehäuse eine im Einbauzustand den Fahrzeuginsassen zugewandte Gehäuseabdeckung auf, an deren Innenseite wenigstens eine Materialschwächung in Form einer Aufreißlinie ausgebildet ist, die im Rückhaltefall durch den sich entfaltenden Gassack aufreißbar ist.

Nachteilig bei den letztgenannten Seitenairbagvorrichtungen ist, dass diese Materialschwächungen in Form einer tiefen Nut so stark ausgebildet ist, dass diese auch von derjenigen Seite der Gehäuseabdeckung sichtbar ist, die dem Fahrzeuginsassen zugewandt ist. Dies stört den Gesamteindruck des Fahrzeuginnenraumes, so dass diesbezügliche Abhilfe sinnvoll ist.

Vor diesem Hintergrund ist es die Aufgabe an die Erfindung, ein Gehäuse für ein Airbagmodul vorzustellen, welches einerseits derart ausgebildet ist, dass es im Rückhaltefall von dem sich entfaltenden Gassack aufreißbar ist, und bei dem andererseits die dem Fahrgastraum zugewandte Gehäuseabdeckung nicht erkennen lässt, dass Materialschwächungen in dem Gehäuse vorhanden sind.

Die Lösung dieser Aufgabe ergibt sich aus den Merkmalen des Hauptanspruchs, während vorteilhafte Weiterbildungen und Ausgestaltungen der Erfindung den Unteransprüchen entnehmbar sind.

Der Erfindung liegt die Erkenntnis zugrunde, dass die genannten Materialschwächungen an der Innenseite der Gehäuseabdeckung der Airbagvorrichtung insbesondere deshalb sichtbar sind, weil diese vergleichsweise tief ausgebildet sind. Genau genommen ist diese Materialschwächung beim letztgenannten Stand der Technik so ausgebildet, dass nur noch eine sehr dünne Materialhaut vorhanden ist.

Zur Vermeidung dieser Sichtbarkeit ist zunächst vorgesehen, die Materialschwächung der Gehäuseabdeckung im Bereich der Aufreißlinien geringer als beim Stand der Technik vorzunehmen, so dass diese von der Fahrgastraumseite nicht mehr sichtbar ist.

Da die durch den sich entfaltenden Gassack aufbringbaren Kräfte zum Aufreißen der Gehäuseabdeckung begrenzt sind, ist zusätzlich eine vorzugsweise verdeckte Aufreißlinie vorgesehen, die leichter aufreißbar ist als die vorgenannten Materialschwächungen in der Gehäuseabdeckung. Dazu ist diese Aufreißlinie durch eine Perforation im Gehäuse der Airbagvorrichtung ausgebildet, die vergleichsweise große materiallose Abschnitte und vergleichsweise schmale Verbindungsstege aufweist. Diese Perforation ersetzt vorzugsweise eine nach dem Stand der Technik ausgebildete Materialschwächung in Form einer Materialaussparung in der Gehäuseabdeckung.

Im Ergebnis wird die Sichtbarkeit der Materialschwächung vermieden und die Gehäuseabdeckung kann mit den gleichen Gassackkräften wie bei konventionellen Airbagvorrichtungen aufgerissen werden.

Die Erfindung betrifft gemäß dem Hauptanspruch demgemäss ein Gehäuse für eine Airbagvorrichtung an einem Fahrzeug, die über einen Hohlraum zur Aufnahme eines Containers eines Gasgenerators und eines Gassacks verfügt. Zudem weist das Gehäuse eine Grundstruktur und eine mit dieser Grundstruktur verbundene sowie im Einbauzustand den Fahrzeuginsassen zugewandte Gehäuseabdeckung auf, an deren Innenseite wenigstens eine Materialschwächung ausgebildet ist, die im Rückhaltefall durch den sich entfaltenden Gassack aufreißbar ist.

Zur Lösung der gestellten Aufgabe ist in Kombination mit den genannten Merkmalen vorgesehen, dass die Materialschwächungen so gering ist, dass diese von der dem Fahrgastraum zugewandten Seite der Gehäuseabdeckung nicht sichtbar ist, und dass die Gehäuseabdeckung zusätzlich über eine als Perforation ausgebildete Aufreißlinie mit der Gehäusegrundstruktur verbunden ist.

Vorzugsweise ist diese Perforation wie beschrieben an einem im Einbauzustand für den Fahrzeuginsassen nicht sichtbaren Bereich des Gehäuses ausgebildet.

Dazu ist die Perforation in einer Weiterbildung der Erfindung von einem Abschnitt der Gehäuseabdeckung überdeckt.

Um nun ein besonders vorteilhaftes Öffnen und Aufschwenken der Gehäuseabdeckung von dem Gehäuse erreichen zu können, ist bevorzugt vorgesehen, dass die Perforation im wesentlichen achsparallel zur Fahrzeughochachse ausgerichtet ist. Daraus ergibt sich, dass sich der Gassack im wesentlichen in Richtung zur Fahrzeugvorderseite entfaltet.

In einer anderen Ausbildung des erfindungsgemäßen Gehäuses ist die Perforation an einem karosserieseitigen Gehäuseabschnitt der Gehäusegrundstruktur ausgebildet. Dabei wird die Perforation in einem materiallosen Bereich des Gehäuses durch Stege gebildet, die eine Verbindung zwischen dem karosserieseitigen Gehäuseabschnitt und der Gehäuseabdeckung bilden.

Um ein optimales Aufreißen und Aufschwenken der Gehäuseabdeckung gewährleisten zu können, wird zudem vorgeschlagen, dass die Perforation und die wenigstens eine Materialschwächung im wesentlichen senkrecht zueinander ausgerichtet sind. Dadurch wird bei zwei Materialschwächungslinien und einer Perforationslinie ein im wesentlichen rechteckiges Aufreißfenster gebildet, durch das der sich entfaltende Gassack aus dem Gehäuse der Airbagvorrichtung austreten kann.

Zur Erleichterung der Aufschwenkbewegung des genannten Aufreißfensters in der Gehäuseabdeckung ist bevorzugt vorgesehen, dass an der Innenseite der Gehäuseabdeckung eine weitere Materialschwächung ausgebildet ist, die eng benachbart und achsparallel zu einer Schwenkachse in dieser Gehäuseabdeckung ausgerichtet ist.

Diese Materialschwächung im Bereich der genannten Schwenkachse ist vorzugsweise so ausgebildet, dass dort die Gehäuseabdeckung zwar nicht aufreißt, aber dennoch ein Hochklappen eines Teils der Gehäuseabdeckung durch den sich entfaltenden Gassack gewährleistet ist.

Damit das Gehäuse der Airbagvorrichtung den erfindungsgemäßen Aufbau sowie die genannten Ausgestaltungen und Weiterbildungen der Erfindung verwirklichen kann, ist vorgesehen, dass dieses aus einem Kunststoff, vorzugsweise einen thermoplastischen Kunststoff besteht.

Das erfindungsgemäße Gehäuse für alle Arten von Airbagvorrichtungen einsetzbar. Vorzugsweise wird dieses für Seitenairbagvorrichtungen an Kraftfahrzeuges genutzt.

Die Erfindung wird nachstehend anhand eines in den Zeichnungen schematisch dargestellten Ausführungsbeispiels näher erläutert. Darin zeigen
- Fig. 1: eine Ansicht einer Seitenairbagvorrichtung im Bereich einer Rücksitzbank eines Kraftfahrzeuges,
- Fig. 2: einen Querschnitt durch die Seitenairbagvorrichtung gemäß Fig. 1 an der Stelle A-A,
- Fig. 3: eine Ansicht der Seitenairbagvorrichtung gemäß Fig. 2 auf ein karosserieseitiges Gehäuseteil, und
- Fig. 4: eine Draufsicht auf die Seitenairbagvorrichtung gemäß Fig. 1 im nicht eingebauten Zustand.

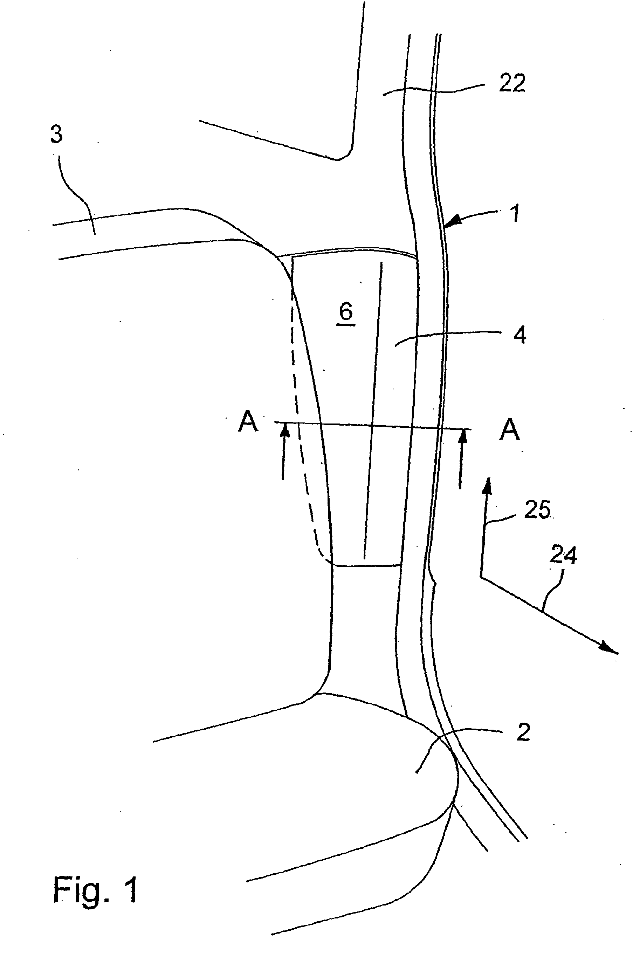

Wie Fig. 1 zeigt, handelt es sich bei der dort und in allen anderen Figuren gezeigten Seitenairbagvorrichtung 4 um eine solche, die im Bereich eines Türausschnitts 1 an einer Fahrzeugkarosserie 22 befestigt ist. Dabei ist die Seitenairbagvorrichtung 4 im wesentlichen zwischen dem Türausschnitt 1 und der Rückenlehne 3 einer Sitzbank 2 angeordnet, wobei ein gestrichelt dargestellter Bereich der Seitenairbagvorrichtung 4 von der Rückenlehne 3 überdeckt ist.

In einem Rückhaltefall, also beispielsweise bei einem Seitenaufprall eines anderen Fahrzeugs auf die Seitenstruktur der Fahrzeugkarosserie 22, wird die fahrgastraumseitige Gehäuseabdeckung 6 der Seitenairbagvorrichtung 4 durch den expandierenden Gassack 12 teilweise aufgerissen, so dass dieser im wesentlichen in Richtung der Fahrzeuglängsachse 24 aus derselben austritt.

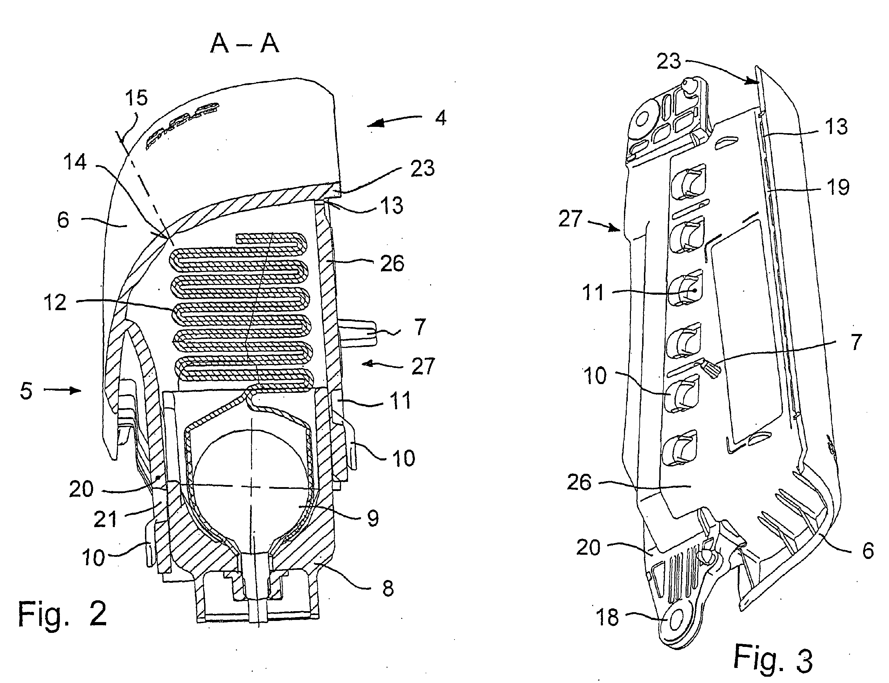

Fig. 2 zeigt in einem Querschnitt A-A durch die Seitenairbagvorrichtung 4 gemäß Fig. 1, dass zu dieser ein Gehäuse 5 mit einer Gehäusegrundstruktur 27 gehört, die im wesentlichen einen karosserieseitigen Gehäuseabschnitt 26, einen innenraumseitigen Gehäuseabschnitt 20 und eine Gehäuseabdeckung 6 umfasst.

Innerhalb dieses Gehäuses 5 ist ein Container 8 eines Gasgenerators 9 sowie ein zusammengefalteter Gassack 12 eingesteckt und mittels in Befestigungsöffnungen 11, 21 des Gehäuses 5 einrastbare Befestigungshaken 10 befestigt. Wie insbesondere die Ansicht gemäß Fig. 3 auf den karosserieseitigen Gehäuseabschnitt 26 zeigt, ist an diesem zudem ein Zentrierzapfen 7 ausgebildet, der als Montagehilfe in eine entsprechende Aufnahmeöffnung in der Fahrzeugkarosserie 22 einsteckbar ist.

Darüber hinaus ist an diesem karosserieseitigen Gehäuseabschnitt 26 ein Befestigungsabschnitt 18 ausgebildet, durch dessen Öffnung beispielsweise ein Stehbolzen an der Fahrzeugkarosserie 22 geführt und die Seitenairbagvorrichtung 4 dort festgeschraubt werden kann.

Wie der Querschnitt durch die Gehäuseabdeckung 6 des Gehäuses 5 in Fig. 2 sowie die Seitenansichten der Airbagvorrichtung deutlich zeigen, ist diese Gehäuseabdeckung 6 über einen Perforationsabschnitt mit dem karosserieseitigen Gehäuseabschnitt 26 verbunden. Diese Perforation 13 ist durch einen im wesentlichen materiallosen Abschnitt gebildet, in dem Stege 19 für eine Verbindung zwischen den beiden genannten Teilen 6, 26 sorgen. Die Perforationsöffnungen, beziehungsweise die Breite der Stege 19, sind dabei so ausgebildet, dass die den Gassack 12 im Rückhaltefall entfaltenden Kräfte diese einerseits leicht aufreißen können, andererseits aber gewährleistet ist, dass im Normalfall die Airbagvorrichtung 4 sicher verschlossen ist.

Damit diese Perforation 13 durch die Fahrzeuginsassen nicht sichtbar ist, befindet sich diese an dem karosserieseitigen Gehäuseabschnitt 26 und wird vorzugsweise zudem von einem Überdeckungsabschnitt 23 der Gehäuseabdeckung 6 überdeckt.

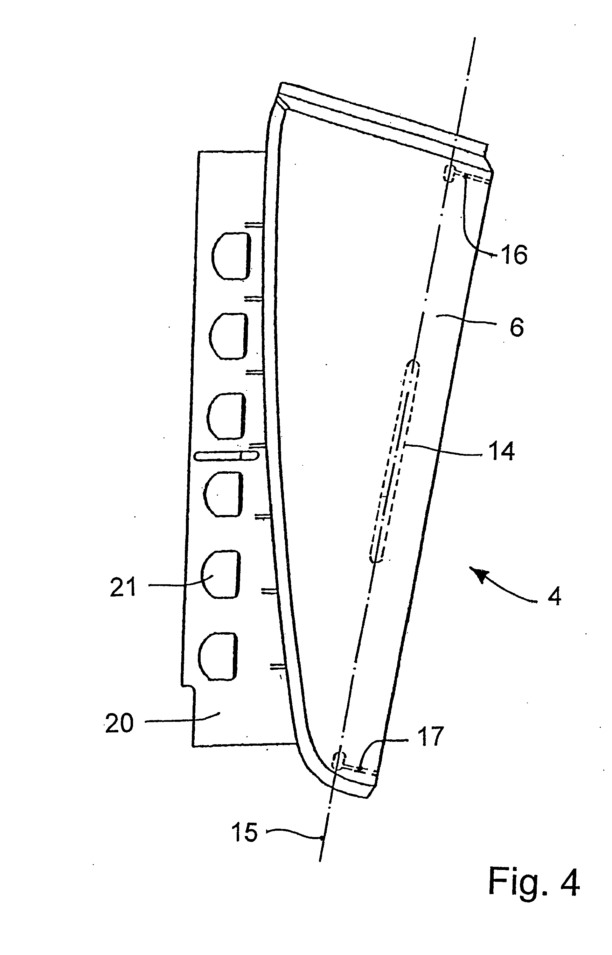

Wie Fig. 2 in Verbindung mit Fig. 4 zeigt, sind an der Innenseite der Gehäuseabdeckung 6 Materialschwächungen 14, 16, 17 vorgesehen, die im wesentlichen senkrecht zueinander ausgerichtet sind. Diese Materialschwächungen 14, 16, 17 sind vorzugsweise als Nuten oder Aussparungen in der Gehäuseabdeckung 6 ausgebildet, deren Tiefe nutzungsabhängig unterschiedlich ist.

Während die Materialschwächungen 16, 17 derart stark sind, dass die von dem sich entfaltenden Gassack 12 auf die Gehäuseabdeckung 6 aufgebrachten Kräfte ausreichen, um an diesen Stellen dieselbe aufzureißen, ist die Materialschwächung 14 so ausgelegt, dass diese nicht aufreist und lediglich ein Aufschwenken des so gebildeten Öffnungsfensters der Seitenairbagvorrichtung 4 um eine im Bereich dieser Materialschwächung 14 wirkende Schwenkachse 15 erlaubt.

Diese Schwenkachse 15 ist dabei vorzugsweise so ausgerichtet, dass diese im wesentlichen achsparallel zur Fahrzeughochachse 25 (Fig. 1) ausgerichtet ist. Durch diesen Aufbau vorgegeben ist bei diesem Ausführungsbeispiel damit auch die Ausrichtung der Aufreißlinie der Perforation 13, die ebenfalls im wesentlichen achsparallel zur Fahrzeughochachse (25) orientiert ist.

Wie die obigen Erläuterungen verdeutlichen, wird durch den erfindungsgemäßen Aufbau des Gehäuses 5 der Airbagvorrichtung 4 erreicht, dass die Materialschwächungen 14, 16, 17 an der dem Fahrgastraum zugewandten Gehäuseabdeckung 6 nicht erkennbar sind, und dass diese Materialschwächungen 16, 17 dennoch durch die vom sich entfaltenden Gassack 12 ausgehenden Kräfte geöffnet werden können.

Unabhängig davon, dass sich das erfindungsgemäße Gehäuse 5 besonders gut für Seitenairbagvorrichtungen eignet, die an der Fahrzeugkarosserie befestigt werden, kann ein anderes erfindungsgemäß ausgebildetes Gehäuse auch bei Seitenairbagvorrichtungen in Sitzlehnen vorteilhaft genutzt werden.

### Bezugszeichen

- 1: Türausschnitt in einer Fahrzeugkarosserie
- 2: Sitzbank
- 3: Rückenlehne
- 4: Seitenairbagmodul
- 5: Gehäuse des Seitenairbagmoduls
- 6: Gehäuseabdeckung
- 7: Zentrierzapfen
- 8: Container des Gasgenerators
- 9: Gasgenerator
- 10: Einrasthaken des Gasgeneratorcontainers
- 11: Einrastöffnung
- 12: Gassack
- 13: Perforation
- 14: Materialschwächung im Bereich der Schwenkachse
- 15: Schwenkachse
- 16: Materialschwächung
- 17: Materialschwächung
- 18: Befestigungsabschnitt
- 19: Steg der Perforation
- 20: Innenraumseitiger Gehäuseabschnitt
- 21: Einrastöffnung
- 22: Fahrzeugkarosserie
- 23: Überdeckungsabschnitt der Gehäuseabdeckung
- 24: Fahrzeuglängsachse
- 25: Fahrzeughochachse
- 26: Karosserieseitiger Gehäuseabschnitt
- 27: Gehäusegrundstruktur

## Patentansprüche

1. Gehäuse (5) für eine Airbagvorrichtung (4) an einem Fahrzeug, mit einem Hohlraum zur Aufnahme eines Containers (8) eines Gasgenerators (9) und eines Gassacks (12), wobei das Gehäuse (5) eine Grundstruktur (27) und eine mit dieser verbundene sowie im Einbauzustand den Fahrzeuginsassen zugewandte Gehäuseabdeckung (6) aufweist, an deren Innenseite wenigstens eine Materialschwächung (16, 17) ausgebildet ist, die im Rückhaltefall durch den sich entfaltenden Gassack (12) aufreißbar ist,
**dadurch gekennzeichnet,**
**dass** die wenigstens eine Materialschwächung (16, 17) so gering ist, dass diese von der dem Fahrgastraum zugewandten Seite der Gehäuseabdeckung (6) nicht sichtbar ist, und dass die Gehäuseabdeckung (6) zusätzlich über eine als Perforation (13) ausgebildete Aufreißlinie mit der Gehäusegrundstruktur (27) verbunden ist.

2. Gehäuse nach Anspruch 1, **dadurch gekennzeichnet, dass** die Perforation (13) an einem im Einbauzustand für den Fahrzeuginsassen nicht sichtbaren Bereich des Gehäuses (5) ausgebildet ist.

3. Gehäuse nach wenigstens einem der vorherigen Ansprüche, **dadurch gekennzeichnet, dass** die Perforation (13) im wesentlichen achsparallel zur Fahrzeughochachse (25) ausgerichtet ist.

4. Gehäuse nach wenigstens einem der vorherigen Ansprüche, **dadurch gekennzeichnet, dass** die Perforation (13) an einem karosserieseitigen Gehäuseabschnitt (26) ausgebildet ist.

5. Gehäuse nach wenigstens einem der vorherigen Ansprüche, **dadurch gekennzeichnet, dass** die Perforation (13) in einem materiallosen Bereich des Gehäuses (5) durch Stege (19) gebildet ist, die eine Verbindung zwischen dem karosserieseitigen Gehäuseabschnitt (26) und der Gehäuseabdekkung (6) bilden.

6. Gehäuse nach wenigstens einem der vorherigen Ansprüche, **dadurch gekennzeichnet, dass** die Perforation (13) von einem Abschnitt (23) der Gehäuseabdeckung (6) überlappt ist.

7. Gehäuse nach wenigstens einem der vorherigen Ansprüche, **dadurch gekennzeichnet, dass** die Perforation (13) und die wenigstens eine Materialschwächung (16, 17) im wesentlichen senkrecht zueinander ausgerichtet sind.

8. Gehäuse nach wenigstens einem der vorherigen Ansprüche, **dadurch gekennzeichnet, dass** an der Innenseite der Gehäuseabdeckung (6) eine weitere Materialschwächung (14) ausgebildet ist, die eng benachbart und achsparallel zu einer Schwenkachse (15) in der Gehäuseabdeckung (6) ausgerichtet ist.

9. Gehäuse nach Anspruch 8, **dadurch gekennzeichnet, dass** die Materialschwächung (14) im Bereich der Schwenkachse (15) derart ausgebildet ist, dass dort die Gehäuseabdekkung (6) nicht aufreißt.

10. Gehäuse nach wenigstens einem der vorherigen Ansprüche, **dadurch gekennzeichnet, dass** das Gehäuse (5) aus einem Kunststoff besteht.

11. Gehäuse nach wenigstens einem der vorherigen Ansprüche, **dadurch gekennzeichnet, dass** das Gehäuse (5) als Gehäuse einer Seitenairbagvorrichtung (4) ausgebildet ist.

## Claims

1. Housing (5) for an airbag device (4) on a motor vehicle, with a hollow space for accommodation of a container (8) of a gas generator (9) and of an airbag (12), whereby housing (5) exhibits a basic structure (27) and a housing cover (6) connected with this which faces the vehicle occupants when installed, on whose inner side at least one material weakness (16, 17) is formed, which can be torn open if airbag (12) unfolds in order to retain the vehicle occupants,
**characterised in that**
the at least one material weakness (16, 17) is so slight that it cannot be seen from the side of the housing cover (6) facing the passenger compartment, and that housing cover (6) is additionally connected with the basic housing structure (27) by means of a tear line being formed as a perforation (13).

2. Housing according to Claim 1, **characterised in that** perforation (13) is formed on a part of housing (5) which is not visible to the vehicle occupants when installed.

3. Housing according to at least one of the previous claims, **characterised in that** the axis of the tear line of perforation (13) is orientated basically parallel to the vertical vehicle axis (25).

4. Housing according to at least one of the previous claims, **characterised in that** the perforation (13) is formed on a vehicle body side housing section (26).

5. Housing according to at least one of the previous claims, **characterised in that** perforation (13) is formed in a material-free area of the housing (5) by means of bridges (19), which create a connection between the vehicle body side housing section (26) and housing cover (6).

6. Housing according to at least one of the previous claims, **characterised in that** perforation (13) is overlapped by a section (23) of housing cover (6).

7. Housing according to at least one of the previous claims, **characterised in that** perforation (13) and the at least one material weakness (16, 17) are arranged basically vertically to one another.

8. Housing according to at least one of the previous claims, **characterised in that** a further material weakness (14) is formed on the inner side of housing cover (6), which is close to and parallel as regards axis to an axis of rotation (15) in housing cover (6).

9. Housing according to Claim 8, **characterised in that** the material weakness (14) in the area of the flap axis (15) is formed in such a way that housing cover (6) does not tear open there.

10. Housing according to at least one of the previous claims, **characterised in that** housing (5) consists of a plastic material.

11. Housing according to at least one of the previous claims, **characterised in that** housing (5) is formed as the housing of a side airbag device (4).

## Revendications

1. Logement (5) pour un dispositif d'airbag (4) sur un véhicule à moteur, ayant un espace vide pour l'aménagement d'un container (8) d'un générateur à gaz (9) et d'un airbag (12), de sorte que le logement (5) montre une structure fondamentale (27) et un couvercle de logement (6) relié au logement et qui fait face aux occupants du véhicule quand ils sont installés, avec sur son côté intérieur au moins une faiblesse matérielle (16,17) formée, pouvant être déchirée si l'airbag (12) se déploie afin de retenir les occupants du véhicule, **caractérisé en ce que** l'au moins une faiblesse matérielle (16,17) est si petite qu'elle ne peut être vue depuis le côté du couvercle du logement (6) faisant face au compartiment passager, et le couvercle du logement (6) est de plus relié à la structure fondamentale du logement (27) au moyen d'une ligne de déchirure formée comme une perforation (13).

2. Logement selon la revendication 1, **caractérisé en ce que** ladite perforation (13) est formée sur une partie du logement (5) qui n'est pas visible par les occupants du véhicule quand ils sont installés.

3. Logement selon au moins une des revendications précédentes, **caractérisé en ce que** l'axe de la ligne de déchirure de la perforation (13) est orientée fondamentalement de manière parallèle à l'axe vertical du véhicule (25).

4. Logement selon au moins une des revendications précédentes, **caractérisé en ce que** la perforation (13) est formée sur une section du logement d'un côté du corps du véhicule (26).

5. Logement selon au moins une des revendications précédentes, **caractérisé en ce que** la perforation (13) est formée dans une zone libre de tout matériel du logement (5) au moyen de ponts (19), qui établissent une connexion entre la section du logement d'un côté du corps du véhicule (26) et le couvercle du logement (6).

6. Logement selon au moins une des revendications précédentes, **caractérisé en ce que** la perforation (13) est recouverte par une section (23) du couvercle du logement (6).

7. Logement selon au moins une des revendications précédentes, **caractérisé en ce que** la perforation (13) et l'au moins une faiblesse matérielle (16,17) sont disposées fondamentalement verticalement l'une contre l'autre.

8. Logement selon au moins une des revendications précédentes, **caractérisé en ce que** une faiblesse matérielle supplémentaire (14) est formée dans la partie interne du couvercle du logement (6), dont l'axe est proche et parallèle, à un axe de rotation (15) dans le couvercle du logement (6).

9. Logement selon la revendication 8, **caractérisé en ce que** la faiblesse matérielle (14) dans la zone de l'axe de rabat (15) est formée de telle manière que le couvercle du logement (6) ne s'éventre pas à cet endroit là.

10. Logement selon au moins une des revendications précédentes, **caractérisé en ce que** le logement (5) se compose d'une matière plastique.

11. Logement selon au moins une des revendications précédentes, **caractérisé en ce que** le logement (5) est formé comme le logement d'un dispositif d'airbag latéral (4).
